# EUROPÄISCHE PATENTSCHRIFT

(11) **EP 0 778 980 B1**
(45) Veröffentlichungstag und Bekanntmachung des Hinweises auf die Patenterteilung: **01.07.1998**
(21) Anmeldenummer: 95928966.1
(22) Anmeldetag: 19.08.1995
(51) Int. Cl.: H01H 25/00, H01H 1/58, B60J 7/057

(54) **HUB-SCHIEBE-SCHALTER**
LIFT-SHIFT SWITCH
INTERRUPTEUR A COULISSE DE LEVAGE

(30) Priorität: 01.09.1994 DE 4431061
(43) Veröffentlichungstag der Anmeldung: 18.06.1997
(73) Patentinhaber: EATON CONTROLS GmbH & Co. KG, 55445 Langenlonsheim (DE)
(72) Erfinder: LENG, Peter, D-55128 Mainz (DE)
(74) Vertreter: Becker, Bernd, Dipl.-Ing.
(86) Internationale Anmeldenummer: DE9501117
(87) Internationale Veröffentlichungsnummer: WO9607191

(56) Entgegenhaltungen:
- DE-A- 4 221 458
- DE-C- 3 931 722
- DE-U- 8 703 172
- DE-U- 9 309 942
- FR-A- 2 563 475

## Beschreibung

Die Erfindung bezieht sich auf einen Hub-Schiebe-Schalter, insbesondere für das HubSchiebedach eines Kraftfahrzeuges, mit einem Anschlußkontakte aufweisenden Gehäuse, einem im Gehäuse verschwenk- oder verschiebbaren Betätigungsknopf, der mit einem Schiebe-Schaltglied verbunden ist, das durch eine Rückstelleinrichtung selbsttätig in seine Ausgangsstellung zurückgeht und den Betätigungsknopf zurückstellt.

Aus der DE 39 31 722 C1 ist ein Schalter bekannt, der einen teilemäßig sehr großen Aufwand benötigt. Dies gilt zum einen für die Schaltermechanik im Innern, deren Federelemente alle in Richtung des Drehpunktes des Betätigungsknopfes wirken und somit die Schaltkräfte beeinflussen. Zum anderen wird für die Anschlußkontakte im Sockel ein großer Platz benötigt, da diese senkrecht dazu abstehen. Darüber hinaus ist die Anzahl der für die elektrischen Funktionen durchzuführenden Einzelteile sehr hoch. Nachteilig ist weiterhin, daß mehrere Kontaktbrücken erforderlich sind, von der eine nur schwenkbar und die andere auch verschiebbar ausgebildet sein muß. Die hohe Anzahl der Einzelteile, die bei der Montage des Schalters zusammengefügt werden müssen, wirken sich weiterhin nachteilig aus, wobei eine baugruppenartige Vormontage nicht möglich ist.

Der Erfindung liegt die Aufgabe zugrunde, einen Schalter der eingangs genannten Art zu schaffen, bei dem bei gewährleisteter Funktion eine geringe Anzahl von Einzelteilen erforderlich ist, die zudem noch als Baugruppen vorfertigbar sind, und bei dem die Anschlußkontakte bei wirtschaftlicher Fertigung möglichst nahe und flach am Schalter entlang geführt sind.

Diese Aufgabe wird erfindungsgemäß dadurch gelöst, daß am Schiebe-Schaltglied ein Dreh-Schaltglied drehbeweglich gelagert ist, das durch einen am Betätigungsknopf befestigten Hebel beaufschlagbar ist.

Durch diese Maßnahme wird eine stets gleiche Position von Schiebe-Schaltglied und Dreh-Schaltglied zueinander erreicht. Die Drehstellung des Dreh-Schaltgliedes wird über den Betätigungsknopf sichergestellt, welche bereits die Lage des Schiebe-Schaltgliedes einstellt. Darüber hinaus können alle Bewegungen des Beteiligungsknopfes so umgelenkt werden, daß auf einem ebenen Stanzgitter oder einer Leiterplatte Konktakt-Bewegungen ausgeführt werden können.

Nach einer vorteilhaften Ausgestaltung der Erfindung ist das einen Teil der Rückstelleinrichtung aufweisende Dreh-Schaltglied mittels einer Klipsverbindung mit dem Schiebe-Schaltglied verbunden, und der am Betätigungsknopf befestigte Hebel ist mit einem T-Stein in eine im Dreh-Schaltglied befindliche T-Nut beweglich eingesetzt, wobei am Schiebe-Schaltglied mindestens eine Lasche befestigt ist, die drehbeweglich mit dem Betätigungsknopf verbunden ist. Durch die Klipsverbindung erreicht man eine kostengünstige und sichere Montage der beiden Schaltglieder zueinander, welche im montierten Zustand eine Baugruppe bilden. Das Einsetzen des T-Steines in die T-Nut ist leicht durchführbar und in Wirkverbindung zueinander kommen nur geringe Reibkräfte zustande. Gemeinsam mit der Lasche des Schiebe-Schaltgliedes, welche drehbeweglich mit dem Betätigungsknopf verbunden ist, und mit der Verbindung von T-Stein in T-Nut sowie der Lagerung der Schaltglieder zueinander ist ein Dreigelenk zwischen den Schaltgliedern und dem Betätigungsknopf gewährleistet.

Für die Funktion des Schalters ist es erforderlich, daß der Betätigungsknopf aus der Neutralstellung nur verschiebbar oder in der Neutralstellung nur verschwenkbar ist, wobei die Betätigungsrichtung analog zur Anwendung vorliegt. Bevorzugt ist daher der Betätigungsknopf in einer in die Oberseite des Gehäuses eingelassenen Mulde angeordnet, und die Seitenflächen des Betätigungsknopfes liegen parallel zu den Seitenwänden des Gehäuses, wobei in den Seitenwänden des Gehäuses zum einen eine kreuzförmige Nut und zum anderen ein Schlitz voneinander beabstandet eingelassen sind, und in die kreuzförmige Nut ist ein am Betätigungsknopf angespritzter Klipsbolzen gleitbeweglich und in den Schlitz ein die Verbindung zwischen der Lasche des Schiebe-Schaltgliedes und dem Betätigungsknopf realisierender Bolzen gleitbeweglich und verklipst eingesetzt. Zweckmäßigerweise besitzt der senkrechte, zum Schlitz ausgerichtete Bereich der kreuzförmigen Nut die Form eines Kreisbogens, dessen Mittelpunkt die Mitte des Schlitzes ist.

Nach einer vorteilhaften Weiterbildung der Erfindung ist die Mulde in der Oberseite des Gehäuses zweistufig ausgebildet, wobei die untere, zum Untergreifen des Betätigungsknopfes dienende Stufe eine geschlossene Oberfläche und die obere Stufe einen in der Null-Stellung durch den Betätigungsknopf abgedeckten Durchbruch aufweist, durch den der am Betätigungsknopf befestigte Hebel, die am Schiebe-Schaltglied angebrachten Laschen und zum Betätigungsknopf führende Leitungen hindurchgeführt sind. Hierdurch muß der Betätigungsknopf zum Untergreifen nicht weit aus dem Gehäuse herausragen. Der Durchbruch und somit das Schalterinnere ist vor Verschmutzungen geschützt, und die Leitungen sind nicht sichtbar und vor Beschädigungen geschützt.

Um zu vermeiden, daß die Kräfte der Federlemente der Rückstelleinrichtung in die Gelenke eingeleitet und dort abgestützt werden, ist nach einer vorteilhaften Ausführungsform die Rückstelleinrichtung zum einen durch ein am Dreh-Schaltglied befestigtes, federbelastete Druckhülsen tragendes Führungsrohr und zum anderen durch zwei an einem Sockel angespritzte, in das Gehäuse hineinragende sowie vertiefte Rückstellpyramiden tragende Vorsprünge gebildet. Somit wird einerseits die Schaltkraft nicht durch unnötige Reibkräfte verfälscht und andererseits wirkt keine der federbelasteten Druckhülsen auf die Schaltglieder. Bevorzugt weist die Rückstellpyramide in mindestens einer Betätigungsrichtung einen einen Druckpunkt realisierenden Absatz auf. Hierdurch erfolgt eine taktive Rückmeldung beim Bedienen des Betätigungsknopfes an den Benutzer.

Damit die Anzahl der Einzelteile weiter verringert werden kann und bei der Herstellung der Sockelbaugruppe die Lage der Kontaktbrücke des Stanzgitters zu den die Kontaktfeder haltenden Auflagen bereits einstückig herstellbar ist, weist nach einer vorteilhaften Weiterbildung der Erfindung der Sockel ein zur Innenseite des Gehäuses mindestens im Bereich von Kontaktpunkten der Kontaktfeder freiliegendes Stanzgitter und mindestens einen Paßzylinder tragenden Dom auf, auf dem die mit Paßbohrungen versehene Kontaktfeder aufsitzt. Durch diese Maßnahmen werden die Herstellungskosten verringert, da das Stanzgitter eingespritzt werden kann. Ferner wird die Qualität dadurch verbessert, daß die Lage der Teile in einem Werkzeug zueinander sichergestellt ist. Weiterhin sind keine störenden Spalten an der Innenseite des Gehäuses zwischen dem Stanzgitter und dem Sockelwerkstoff vorhanden.

Elemente der Kontaktfeder, welche die gleiche Funktion ausüben, sind in einer Ebene vorgesehen. Dazu besitzt zweckmäßigerweise die Kontaktfeder einen mittleren ebenen, die Paßbohrungen aufweisenden Steg, von dem mehrere V-förmige Winkel ausgehen, deren Spitzen je einer Betätigungsfläche des Dreh-Schaltgliedes oder einer Berührungsfläche des Schiebe-Schaltgliedes zugewandt sind, und der dem mittleren Steg abgewandte Schenkel des V-förmigen Winkels weist eine von dem Stanzgitter wegweisende, die Kontaktpunkte bildende Abknickung auf.

Eine große Montageerleichterung und damit auch eine dementsprechende Kostenersparnis ergibt sich durch das lose Einlegen der Kontaktfeder, welche nicht zusätzlich gehaltert werden muß. Bevorzugt ist dabei vorgesehen, daß die Kontaktfeder mit ihren, im ebenen Steg vorhandenen zwei Paßbohrungen über die an den Domen befindlichen Paßzylindern auf den Domen aufgelegt und nicht zusätzlich befestigt ist, wobei zum seitlichen Toleranzausgleich eine der Paßbohrungen als ein Langloch ausgebildet ist.

Eine das Kontaktprellen verringernde und beim Kontakttreffen eine kontaktschützende bevorzugte Weiterbildung der Erfindung sieht vor, daß die dem Stanzgitter im Gehäuse zugeordneten Kontaktpunkte der Kontaktfeder durch Schlitze Zwillingskontakte bilden. Zur selbsttätigen Kontaktreinigung erfolgt zwischen den Kontaktpunkten der Kontaktfeder und dem Stanzgitter eine konstruktiv festgelegte, geringe Relationsbewegung.

Weiterhin reicht zweckmäßigerweise eine Seite der Kontaktfeder zwischen die am Sockel vorhandenen Vorsprünge hinein, und die Kontaktfeder besitzt breite, die Kontaktpunkte trennende Ausstanzungen, wobei die die Kontaktpunkte tragenden Kontaktarme mit Durchstanzungen versehen sind, und die Kontaktfeder zumindest im Bereich der Kontaktpunkte mit Kontaktmaterial ausgestattet ist. Somit erhält man eine weiche Kontaktfeder, die das Schaltgefühl nicht negativ beeinflußt und die Lebensdauer der Kontaktfeder wird durch das Vorhandensein des Kontaktmaterials erhöht.

Die Montageposition der Widerstände wird bevorzugt dadurch erreicht, daß das Stanzgitter auf der der Kontaktfeder abgewandten Seite in durch mit am Sockel angespritzte Rippen gebildete Kammern freiliegt, und in die Kammern Widerstände eingelegt sind, deren Anschlußdrähte elektrisch leitend mit dem Stanzgitter verbunden sind.

Mit den im Betätigungsknopf vorhandenen Beleuchtungselementen soll zum einen eine Suchbeleuchtung als auch zum anderen eine Funktionsbeleuchtung realisierbar sein. Die Beleuchtungselemente müssen dazu mit einem elektrischen Leiter verbunden sein, der dem Betätigungsknopf die nötigen Freiheitsgrade offenläßt. Zweckmäßigerweise ist dazu am Stanzgitter eine flexible, elektrische Leiterfolie angebracht, die durch den Durchbruch im Gehäuse zu im Betätigungsknopf vorhandenen Beleuchtungselementen führt.

Mit dem Hub-Schiebe-Schalter werden unterschiedliche Motoren angesteuert, die sowohl einen Rechts- als auch einen Linkslauf aufweisen. Die Ansteuerung der unterschiedlichen Motoren sowie deren Drehrichtung wird in Zusammenwirkung der einen Kontaktfeder mit den Kontaktpunkten des Stanzgitters realisiert. Dazu ist nach einer weiteren vorteilhaften Ausgestaltung das Dreh-Schaltglied um die Achse der Klipsverbindung mit dem Schiebe-Schaltglied schwenkbar, wobei die der Kontaktfeder zugewandten Betätigungsflächen des Dreh-Schaltgliedes nur in einer Gehäusehälfte, die durch die Mittelachse des Gehäuses festgelegt ist, vorgesehen sind, und die Betätigungsflächen des Dreh-Schaltgliedes liegen in der Neutral- und Schiebestellung parallel zum Stanzgitter und erst nach dem Verschwenken des Betätigungsknopfes drücken die Betätigungsflächen auf einer Seite der Achse die Kontaktfeder in Richtung des Stanzgitters. Bevorzugt ist ferner das Schiebe-Schaltglied zwischen Gehäuseunterseite und einer Sockelwand geführt, und die dem Stanzgitter zugewandten, der Kontaktfeder zugeordneten Berührungsflächen bestehen aus mindestens einer Ruhefläche, die die Kontaktfeder leicht belastet läßt, mindestens einer Aktivfläche, die die Kontaktfeder gegen das Stanzgitter drückt, und einer schräg verlaufenden, dem V-förmigen Winkel der Kontaktfeder angepaßten Übergangsfläche, wobei die Ruhefläche und die Aktivfläche parallel zum Stanzgitter, auch nach Verschwenken des Betätigungsknopfes ausgerichtet, sind, und wobei die Betätigungsflächen des Schiebe-Schaltgliedes auf nur einer durch die Mittelachse des Gehäuses festgelegten Gehäusehälfte, in der keine Berührungsflächen des Dreh-Schaltgliedes vorhanden sind, vorgesehen sind.

Die Anzahl der Einzelteile wird weitgehend verringert, wenn nach einer vorteilhaften Ausführungsform das Stanzgitter im Sockel eingespritzt ist, eine gerade Auskragung des Stanzgitters über den Sockel hinausragt und im vorbestimmten Abstand zum Sockel mindestens eine die Auskragung umfassende Spritzleiste vorhanden ist. Durch diese Maßnahme wird erreicht, daß die gleichzeitig mit dem Sockel gespritzte Spritzleiste die Auskragung justierend umfaßt und mittels dieser Spritzleiste die gesamte Auskragung gehändelt werden kann. Bevorzugt ist am Sockel eine Stützkante angebracht, an der sich eine Anlagefläche der Spritzleiste nach dem Biegen der Auskragung abstützt. Durch das Zusammenwirken von Anlagefläche der Spritzleiste und Stützkante des Sockels liegt immer eine definierte abgewinkelte Lage der Auskragung zum Sockel vor.

Über die Anschlußkontakte sollen auch die im Betätigungsknopf vorhandenen Beleuchtungselemente elektrisch verbunden werden. Damit die flexible Leiterfolie zum Anschließen an das Stanzgitter keinen weiteren Knick erhält, wird diese an Materialstege in der Auskragung angeschlossen. Dazu sind zweckmäßigerweise mit der Spritzleiste in der Auskragung Materialstege zusammengefaßt, die mit dem Stanzgitter im Sockel keine direkte Verbindung besitzen und diese Materialstege haben nach dem Biegen beidseits der Biegekante die gleiche Ausrichtung.

Um die Lage und Winkel der Anschlußkontakte an der Auskragung genau zu definieren, trägt bevorzugt ein Spritzsteg Nutsteine, die in Nuten sowohl im Sockel als auch in einem an dem Sockel befestigbaren, den Spritzsteg zwischen sich justierbaren Deckel einsetzbar sind.

Eine möglichst flache Ausführung des Hub-Schiebe-Schalters wird dadurch sichergestellt, wenn die Auskragung um zweimal 90° gebogen wird. Dadurch liegen die Anschlußkontakte parallel zum Stanzgitter vor, wobei über Spritzleiste und Spritzsteg die Lage vorbestimmt ist. Um die Aufsteck- und Abziehkräfte des auf die Anschlußkontakte zu schiebenden Kontaktsteckers abzustützen und dabei gleichzeitig zu vermeiden, daß diese Kräfte ins Stanzgitter eingeleitet werden, ist ferner bevorzugt vorgesehen, daß die Auskragung zwischen Spritzleiste und dem Sockel eine erste 90°-Biegung und zwischen der Spritzleiste und dem Spritzsteg eine zweite 90°-Biegung erhält, wodurch die Anlagefläche der Spritzleiste sich an der Stützkante am Sockel abstützt und der Nutstein am Spritzsteg in der Nut am Sockel zu liegen kommt.

Damit sowohl die Anschlußstecker im Bereich der Auskragung als auch die Widerstände geschützt werden und um zu vermeiden, daß die Auskragung sich beim Aufschieben des Kontaktsteckers aufbiegt ist weiterhin bevorzugt vorgesehen, daß der am Sockel verklipsbare Deckel die zweifach gebogene Auskragung überdeckt, der Deckel eine parallel zum Stanzgitter ausgerichtete Steckeröffnung besitzt, und eine Platte des Deckels die am Stanzgitter befestigten Widerstände abdeckt.

Der der Erfindung zugrundeliegende Gedanke wird in der nachfolgenden Beschreibung anhand eines Ausführungsbeispieles, das in der Zeichnung dargestellt ist, näher erläutert. Es zeigt:

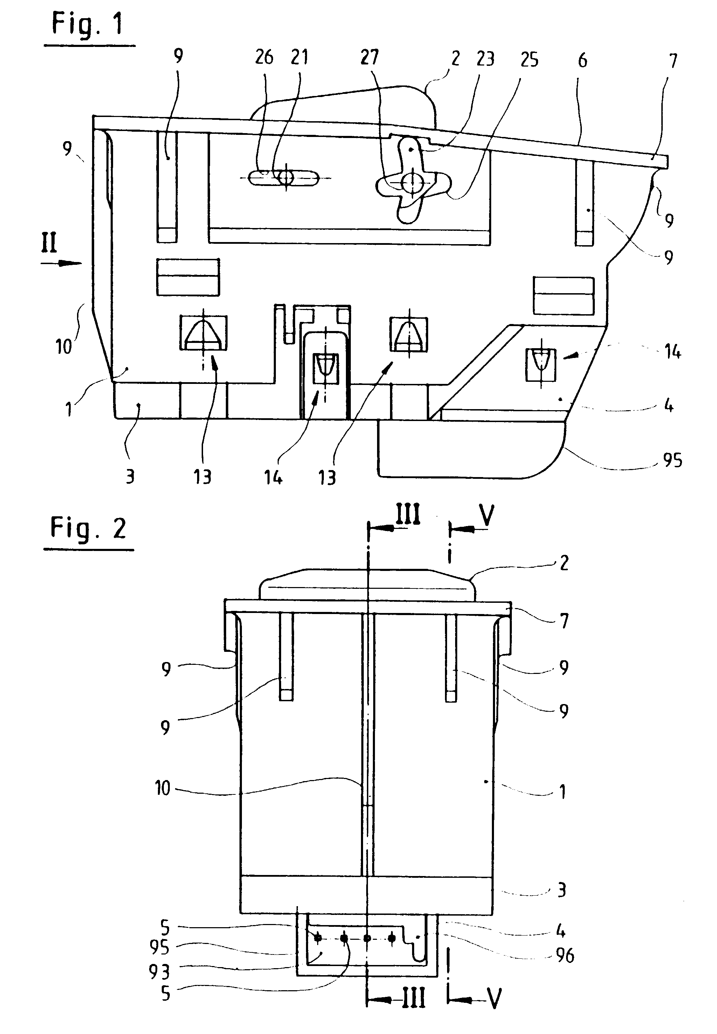

- Fig. 1: eine Seitenansicht auf einen Hub-Schiebe-Schalter nach der Erfindung,
- Fig. 2: eine Ansicht auf den Hub-Schiebe-Schalter gemäß Fig. 1 in Richtung des Pfeiles II,
- Fig. 3: einen Schnitt durch den Hub-Schiebeschalter gemäß Fig. 2 entlang der Linie III-III in Neutralstellung,
- Fig. 4: den Hub-Schiebe-Schalter gemäß Fig. 3 in betätiger Stellung,
- Fig. 5: einen Schnitt durch den Hub-Schiebe-Schalter gemäß Fig. 2 entlang der Linie V-V in Neutralstellung,
- Fig. 6: den Hub-Schiebe-Schalter gemäß Fig. 5 in betätigter Stellung,

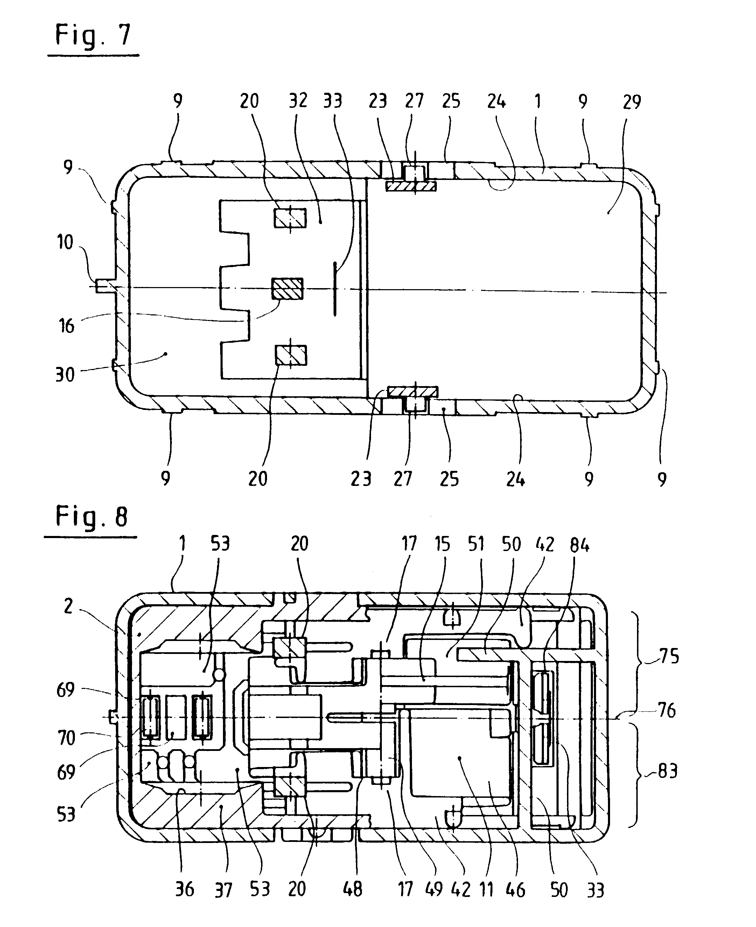

- Fig. 7: einen Schnitt durch den Hub-Schiebe-Schalter gemäß Fig. 3 entlang der Linie VII-VII,
- Fig. 8: einen Schnitt durch den Hub-Schiebe-Schalter gemäß Fig. 3 entlang der Linie VIII-VIII,
- Fig. 9: eine Ansicht auf den Sockel des Hub-Schiebe-Schalters mit eingesetzter Kontaktfeder bei nichtdargestelltem Stanzgitter,
- Fig. 10: eine alternative Ausführung der Kontaktfeder,
- Fig. 11: einen Schnitt durch den Hub-Schiebe-Schalter gemäß Fig. 3 entlang der Linie XI-XI,

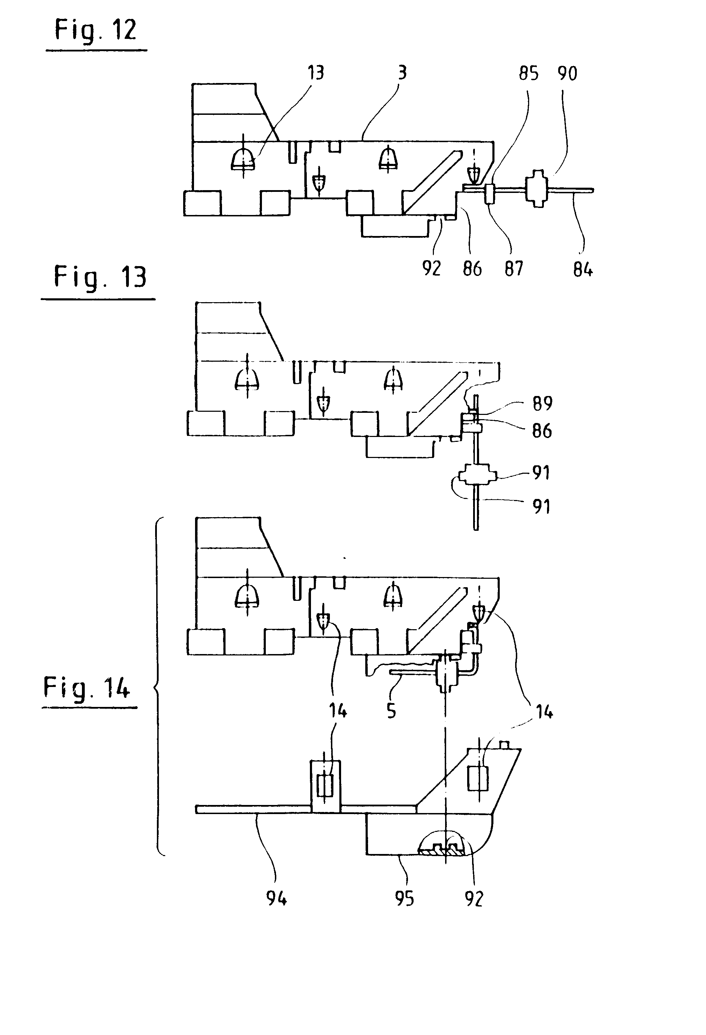

- Fig. 12: eine Seitenansicht der Sockelbaugruppe, bestehend aus Sockel, Stanzgitter, Spritzleiste und Spritzsteg,
- Fig. 13: die Sockelbaugruppe gemäß Fig. 12 mit einer ersten 90°-Biegung der Auskragung und
- Fig. 14: die Sockel-Baugruppe gemäß Fig. 12 mit zwei 90°-Biegungen der Auskragung und in Klipsstellung befindlichem Deckel.

Die äußerlich sichtbaren Teile des Hub-Schiebe-Schalters sind im wesentlichen das Gehäuse 1, der über das Gehäuse 1 hervorstehende Betätigungsknopf 2, der am Gehäuse 1 befestigte Sockel 3, der einen Deckel 4 trägt, und die zwischen Sockel 3 und Deckel 4 vorliegenden Anschlußkontakte 5. Das Gehäuse 1 ist im wesentlichen rechteckig ausgebildet und besitzt an seiner Oberseite 6 einen umlaufenden Wulst 7, mit dem der Hub-Schiebe-Schalter in einer nichtdargestellten Einbauöffnung zur Anlage kommt. Mit Rippen 9 wird das Gehäuse 1 in der Aufnahmeöffnung justiert. Ein Unverwechselbarkeitssteg 10 sorgt für die richtige Lage des Hub-Schiebe-Schalters in der Aufnahmeöffnung. Über Klipsverbindungen 13 ist der Sockel 3 mit dem Gehäuse 1 verbunden. Die Verbindung zwischen Deckel 4 und Sockel 3 wird mit Klipsverbindungen 14 realisiert.

Im Gehäuse 1 ist ein durch den Betätigungsknopf 2 verschiebbares Schiebe-Schaltglied 11 eingesetzt. Drehbeweglich am Schiebe-Schaltglied 11 ist ein Dreh-Schaltglied 15 gelagert. Das Schiebeschaltglied 15 wird durch einen am Betätigungsknopf 2 befestigten Hebel 16 beaufschlagt.

Das Dreh-Schaltglied 15 weist einen Teil einer Rückstelleinrichtung 12 auf Weitere Einzelteile sind am Sockel 3 vorhanden. Auf die funktionalen Zusammenhänge der Rückstelleinrichtung 12 wird noch näher eingegangen. Die Schaltglieder 11 und 15 sind mittels einer Klipsverbindung 17 zu einer Baugruppe zusammengefügt. Der am Betätigungsknopf 2 befestigte Hebel 16 trägt einen T-Stein 18, der in eine im Dreh-Schaltglied 15 befindliche T-Nut 19 beweglich eingesetzt ist. In Wirkverbindung mit dem Betätigungsknopf 2 sind am Schiebe-Schaltglied 11 zwei Laschen 20 befestigt. Die Verbindung erfolgt über Bolzen 21, wobei die Laschen 20 drehbeweglich sind.

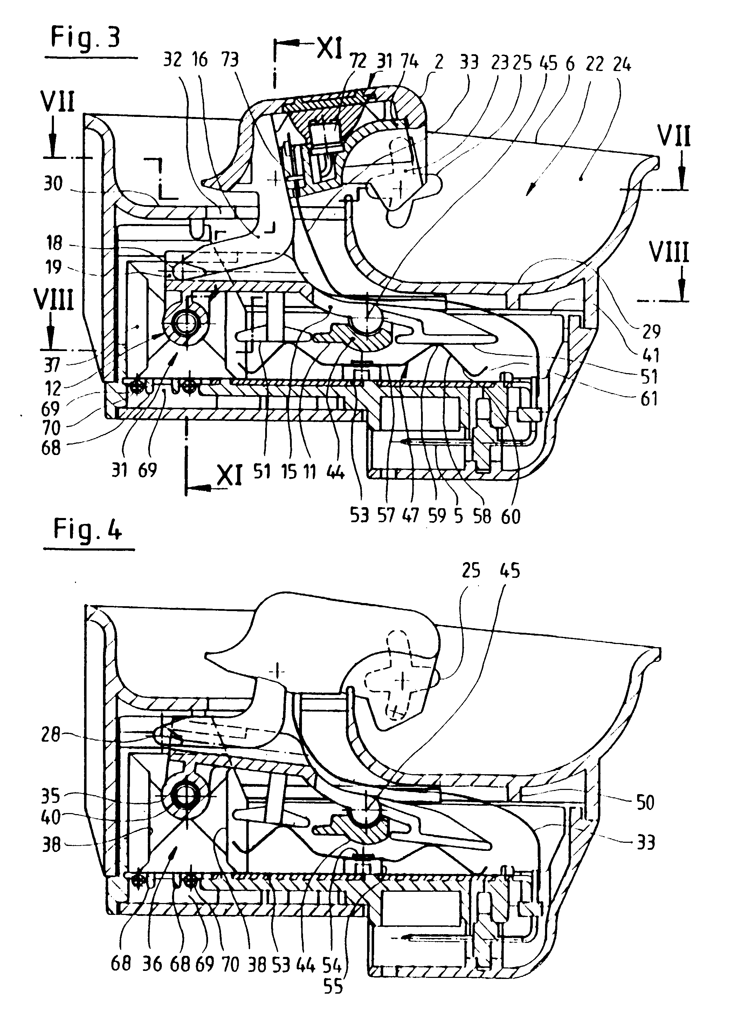

Der Hebel 16 am Betätigungsknopf 2 ist um annähernd 90° abgewinkelt und trägt an seinem Ende den T-Stein 18, der beidseits des Hebels 16 aus einem tropfenförmigen Ansatz 28 besteht. Der spitze Winkel des tropfenförmigen Ansatzes 28 ist auf die Klipsverbindung 17 der beiden Schaltglieder 11 und 15 zugerichtet, wodurch in der ausgeschwenkten Position (Fig. 4) der T-Stein 18 noch im Eingriff mit der T-Nut 19 des Dreh-Schaltgliedes 15 ist. Die T-Nut 19 befindet sich in der Oberseite des Drehschaltgliedes 15. Der Hebel 16 am Betätigungsknopf 2 liegt mitten in der T-Nut 19.

In die Oberseite 6 des Gehäuses 1 ist eine zweistufig ausgebildete Mulde 22 eingelasen, in welcher sich der Betätigungsknopf 2 befindet, der nur mit einem geringen Teil über die Oberseite 6 des Gehäuses 1 hinwegreicht. Die Seitenflächen 23 des Betätigungsknopfes 2 sind parallel zu den Seitenwänden 24 des Gehäuses 1 angordnet. Voneinander beabstandet befinden sich in den Seitenwände 24 des Gehäuses 1 auf jeder Seite eine kreuzförmige Nut 25 und ein Schlitz 26. In die kreuzförmige Nut 25 ist ein am Betätigungsknopf 2 angespritzter Klipsbolzen 27 eingesetzt. In dem Schlitz 26 befindet sich gleitbeweglich ein Bolzen 21, der zudem noch die Verbindung zwischen der Lasche 20 und dem Schiebe-Schaltglied 11 realisiert. Der zum Schlitz 26 senkrecht ausgerichtete Bereich der kreuzförmigen Nut 25 in der Seitenwand 24 des Gehäuses 1 besitzt die Form eines Kreisbogens, dessen Mittelpunkt die Mitte des Schlitzes 26 ist.

Die untere, zum Untergreifen des Betätigungsknopfes 2 dienende Stufe 29 der Mulde 22 besitzt eine geschlossene Oberfläche. Die obere Stufe 30 in der Mulde 22 weist einen Durchbruch 32 auf, der in der Null-Stellung 31 des Hub-Schiebe-Schalters durch den Betätigungsknopf 2 abgedeckt ist. Durch diesen Durchbruch 32 erstrecken sich der am Betätigungsknopf 2 befestigte Hebel 16, die am Schiebe-Schaltglied 11 angebrachten Laschen 20 und die zum Betätigungsknopf 2 führenden Leitungen 33.

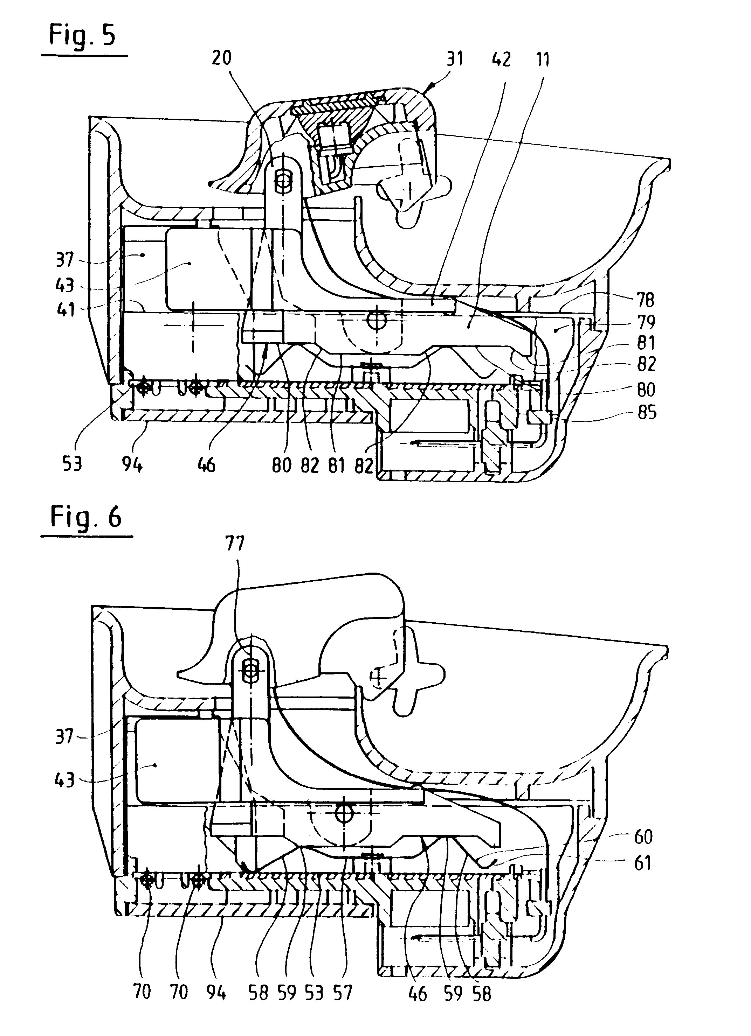

Die Rückstelleinrichtung 12 für den Betätigungsknopf 2 des Hub-Schiebe-Schalters besteht einerseits aus einem am Dreh-Schaltglied 15 befestigten, federbelasteten Druckhülsen 34 tragenden Führungsrohr 35 und andererseits aus zwei an dem Sockel 3 angespritzten, in das Gehäuse 1 hineinragenden Vorsprüngen 37, die auf ihrer Innenseite vertiefte Rückstellpyramiden 36 tragen. In die Führungsbohrung 39, welche koaxial im Führungsrohr 35 durchgehend eingelassen ist, ist eine Druckfeder 40 eingesetzt, die an jedem Ende eine unverlierbare Druckhülse 34 trägt. Unter der Wirkung der Druckfeder 40 werden die Druckhülsen 34 nach außen gegen die vertieften Rückstellpyramiden 36 in den Vorsprüngen 37 gedrückt, wodurch nach Loslassen des Betätigungsknopfes 2 die Rückstelleinrichtung 12 und damit auch die Schaltglieder 11 und 15 ihre in den Figuren 3 und 5 gezeigte Null-Stellung 31 einnehmen. In Richtung der Schiebebewegung des Betätigungsknopfes 2 weisen die in die Vorsprünge 37 eingelassenen Rückstellpyramiden 36 je einen Absatz 38 auf. Sobald die Druckhülsen 34 bei der Verschiebebewegung des Betätigungsknopfes 2 an diesen Absatz 38 zur Anlage kommen, muß über eine erhöhte Betätigungskraft dieser Druckpunkt überwunden werden.

Im folgenden wird auf die Funktionszusammenhänge der beiden Schaltglieder 11 und 15 eingegangen. Zwischen der Oberkante 41 des Sockels 3 und der Unterseite der Wandung der unteren Stufe 29 ist das Schiebe-Schaltglied 11 mittels Ansätzen 42 gleitbeweglich festgelegt. In Fortsetzung der Ansätze 42 stehen dazu senkrechte Scheiben 43, welche die Vorsprünge 37 des Sockels 3 von außen umgreifen. Auf jeder Seite trägt das Schiebe-Schaltglied 11 je eine Lasche 20, mit der es mit dem Betätigungsknopf 2 verbunden wird. Die Verbindung zwischen dem rechten und dem linken Teil des Schiebe-Schaltgliedes 11 wird durch ein Segmentstück 44 bewerkstelligt. In der Achse 45 des Segmentstückes 44 befindet sich der Drehpunkt zwischen dem Schiebe-Schaltglied 11 und dem Dreh-Schaltglied 15 und gleichzeitig die Klipsverbindung zwischen dem Schiebe-Schaltglied 11 und dem Dreh-Schaltglied 15. Am Segmentstück 44 befindet sich auf einer Hälfte des Schiebe-Schaltgliedes 11 die Berührungsfläche 46, die mit der Kontaktfeder 47 zusammenwirkt. Um die Achse 45 des Segmentstückes 44 ist mittels der Klipsverbindung 17 das Dreh-Schaltglied 15 schwenkbeweglich am Schiebe-Schaltglied 11 eingeklipst. Zwischen den Klipsverbindungen 17 besitzt dazu das Schiebe-Schaltglied 11 eine Segmentausnehmung 48, in die das Achsenstück 49 des Dreh-Schaltgliedes 15 eingesetzt wird. Die Betätigungsflächen 51 des Dreh-Schaltgliedes 15 befinden sich auf der von den Berührungsflächen 46 des Schiebe-Schaltgliedes 11 freigelassenen Seite des Gehäuses 1. Zur Führung des Schiebe-Schaltgliedes 11 sind an der Unterseite der unteren Stufe 29 der Mulde 22 Rippen 50 angeformt, die auch zur Versteifung des Gehäuses 1 dienen.

In den Sockel 3 ist ein Stanzgitter 53 eingespritzt. Mindestens im Bereich von Kontaktpunkten 52 einer Kontaktfeder 47 liegt das Stanzgitter 53 zur Innenseite des Gehäuses 1 frei. Zwei Dome 55 sind auf der Innenseite des Sockels 3 mitangespritzt und tragen je einen Paßzylinder 54. Die auf den Domen 55 aufsitzenden Kontaktfedern 47 übergreifen mit Paßbohrungen 56 die Paßzylinder 54 auf den Domen 55.

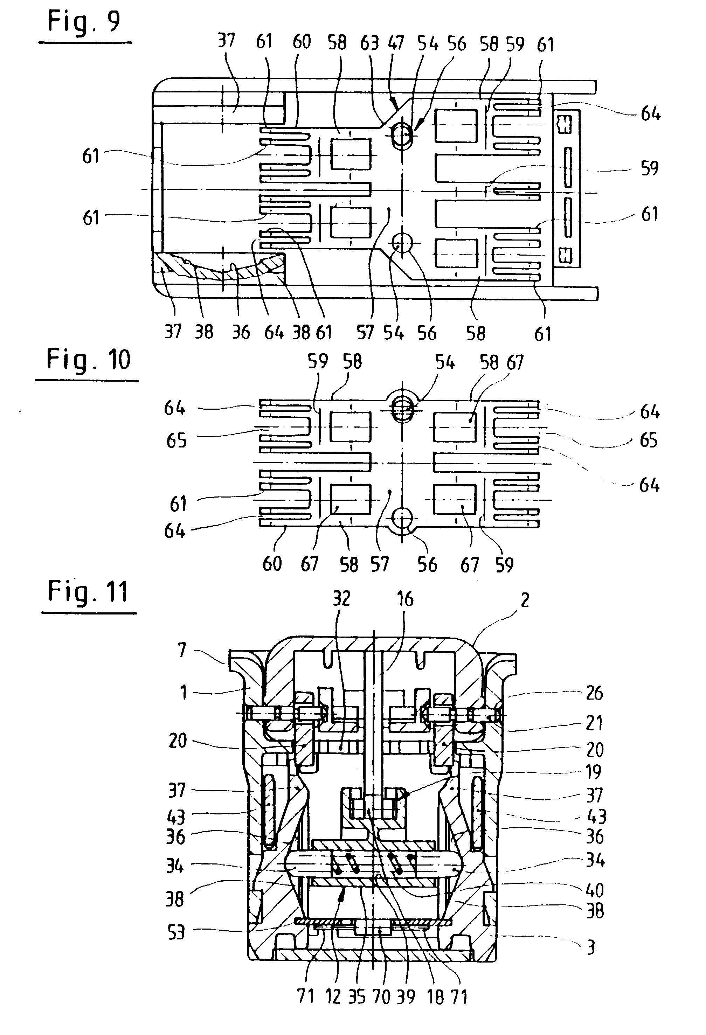

Die im Hub-Schiebe-Schalter verwendete Kontaktfeder 47 besitzt einen mittleren ebenen Steg 57, der Paßbohrungen 56 aufweist. Ausgehend von diesem Steg 57 befindet sich auf jeder Seite ein V-förmiger Winkel 58, dessen Spitzen 59 je einer Betätigungsfläche 51 des Dreh-Schaltgliedes 15 und/oder eine Berührungsfläche 46 des Schiebe-Schaltgliedes 11 zugewandt sind. Der dem mittleren Steg 57 abgewandte Schenkel 60 des V-förmigen Winkels 58 weist eine von dem Stanzgitter 53 wegweisende Abknickung 61 auf. Der Scheitelpunkt der Abknickung 51 mit dem Schenkel 60 bildet den Kontaktpunkt 52 der Kontaktfeder 47. Beim Betätigen der Kontaktfeder 47 kommt der Kontaktpunkt 52 auf dem Stanzgitter 53 zur Anlage und gleitet bis zur Beendigung des Betätigungsweges des Schaltgliedes 11 oder 15 auf dem Stanzgitter 53 entlang, wodurch eine Kontaktselbstreinigung erfolgt. In ihrem ebenen Steg 57 besitzt die Kontaktfeder 47 zwei Paßbohrungen 56. Mittels dieser Paßbohrungen 56 wird die Kontaktfeder 47 über die an den Domen 55 befindlichen Paßzylinder 54 auf die Dome 55 aufgelegt. Eine zusätzliche Befestigung ist nicht erforderlich. Zum Toleranzausgleich ist eine der Paßbohrungen 56 als ein Langloch 63 ausgebildet. Durch Schlitze 64 im Bereich des Kontaktpunktes 52 der Kontaktfeder 47 werden für einen Kontakt Zwillingskontakte gebildet, die dem Stanzgitter 53 im Gehäuse 1 zugeordnet sind. Das Stanzgitter 53 im Sockel 3 reicht auch zwischen die Vorsprünge 37. Dementsprechend ist die Kontaktfeder 47 in diesem Bereich auf die lichte Weite zwischen den Vorsprüngen 37 angepaßt. Außerhalb der Vorsprünge 37 ist gemäß Fig. 9 die Kontaktfeder 47 an die Gesamtbreite des Sockels 3 angepaßt, wodurch eine größere Anzahl von zu realisierenden Strompfaden möglich ist. Alternativ dazu ist gemäß Fig. 10 eine Kontaktbrücke 47 dargestellt, welche auf beiden Seiten vom ebenen Steg 47 die gleiche Breite besitzt. Im Bereich der Kontaktpunkte 52 besitzt die Kontaktfeder 47 breite Ausstanzungen 65, welche die Kontaktpunkte 52 trennen. Die Ausstanzungen 65 haben die gleiche Länge wie die Schlitze 64 und beginnen an der Außenseite der Abknickung 61 und reichen bis annähernd zu den Spitzen 59 des V-förmigen Winkels 58 der Kontaktfeder 47. Damit beide Schenkel des V-förmigen Winkels 58 gleichelastisch sind, sind Durchstanzungen 67 vorhanden, die in der Nähe der Spitzen 59 des V-förmigen Winkels 58 beginnen und bis in den Bereich des Steges 57 der Kontaktfeder 47 hineinreichen. Die dem Stanzgitter 53 zugewandten Kontaktpunkte 52 der Kontaktfeder 47 besitzen ein Kontaktmaterial, das die elektrischen Eigenschaften verbessert.

Zwischen den Vorsprüngen 37 liegt das Stanzgitter 53 auf der der Kontaktfeder 47 abgewandten Seite frei. Mittels Rippen 68, welche zum Sockel 3 gehören, sind dort Kammern 69 eingelassen. Widerstände 70 sind in die Kammern eingelegt, und die Anschlußdrähte 71 der Widerstände 70 sind mit dem Stanzgitter 53 verlötet. In der mittleren Kammer 69 befindet sich kein Widerstand. Eine flexible elektrische Leiterfolie 33 ist am Stanzgitter 53 angelötet. Sie verläuft durch den Durchbruch 32 in der Mulde 22 des Gehäuses 1 zu den Beleuchtungselementen 72 im Betätigungsknopf 2. Das Beleuchtungselement 72 ist eine Leuchtdiode, die mit ihren Anschlüssen 73 innerhalb des Betätigungsknopfes 2 an der Leiterfolie 33 verlötet ist. In einem Knopfdeckel 74 ist die Leuchtdiode 72 im Betätigungsknopf 2 verspannt und beleuchtet ein im Zweifarbenspritzverfahren im Betätigungsknopf 2 eingelassenes Symbol.

In die Achse 45 der Klipsverbindung 17 ist das Dreh-Schaltglied 15 in dem Schiebe-Schaltglied 11 schwenkbar. Die Schwenkbewegung wird über den Betätigungsknopf 2 eingeleitet, wobei sich dessen Klipsbolzen 27 in den kreisförmigen Bereich der kreuzförmigen Nut 25 einschwenkt. Der am Betätigungsknopf angebrachte Hebel 16 nimmt mit seinem T-Stein 18, der in der T-Nur 19 des Dreh-Schaltgliedes 15 eingesetzt ist, das Dreh-Schaltglied 15 mit und dreht es um die Achse 45. Die Betätigungsflächen 51 des Dreh-Schaltgliedes 15 sind nur in einer Gehäusehälfte 75, welche durch die Mittelachse 76 des Gehäuses gebildet wird, vorhanden. In der Neutralstellung 31 bzw. der Schiebestellung 77 liegen die Betätigungsflächen 51 des Dreh-Schaltgliedes 15 parallel zum Stanzgitter 53 (vergl. Fig. 3). Erst nach dem Verschwenken des Betätigungsknopfes 2 drücken die Betätigungsflächen 51 auf einer Seite der Achse 45 die Kontakftfeder 47 in Richtung des Stanzgitters 53 (vergl. Fig. 4).

Zwischen einer Sockelwand 79 und der Gehäuseunterseite 78 ist das Schiebe-Schaltglied 11 geführt. Die dem Stanzgitter 53 zugewandten, der Kontaktfeder 47 zugeordneten Berührungsflächen 46 des Schiebe-Schaltgliedes 11 besitzen zwei Ruheflächen 80 und zwei Aktivflächen 81. Die Ruheflächen 80 lassen die Kontaktfedern 47 unbelastet. Bei der Verschiebung des Schiebe-Schaltgliedes 11 kommt die Aktivfläche 81 über den V-förmigen Winkel 58 der Kontaktfeder 47 und drückt diese gegen das Stanzgitter 53, wobei die Kontaktpunkte 52 auf dem Stanzgitter 53 zur Anlage kommen. Zwischen der Ruhefläche 80 und der Aktivfläche 81 befindet sich eine Übergangsfläche 82, welche schräg verläuft und dem V-förmigen Winkel 58 der Kontaktfeder 47 angepaßt ist. Die Ruhefläche 80 und die Aktivfläche 81 liegen parallel zum Stanzgitter 53 und ändern auch ihre parallele Ausrichtung bei Verschwenkung des Betätigungsknopfes 2 nicht. Die Berührungsflächen 46 des Schiebe-Schaltgliedes 11 sind nur in einer Gehäusehälfte 83 des durch die Mittelachse 76 des Gehäuses 1 beschriebenen Bereiches vorhanden, bzw. sie kommen nur in dem Bereich vor, indem keine Betätigungsflächen 51 des Drehschaltgliedes 15 vorgesehen sind.

Das im Sockel 3 eingespritzte Stanzgitter 53 endet aufder Seite der Vorsprünge 37 innerhalb des Sockels 3 und besitzt auf der gegenüberliegenden Seite eine gerade Auskragung 84. Die Auskragung 84 ragt über den Sockel 3 hinaus und besitzt im vorbestimmten Abstand zum Sockel 3 eine die Auskragung 84 umfassende Spritzleiste 85. Alle Stanzstreifen des Stanzgitters 53 sind in dieser Spritzleiste 85 zusammengefaßt. Eine Stützkante 86 befindet sich am Sockel 3. Nach dem Biegen der Auskragung 84 stützt sich eine an der Spritzleiste 85 angebrachte Anlagefläche 87 an der Stützkante 86 ab und bestimmt somit den Abstand der Biegung. In der Auskragung 84 sind auch zum Stanzgitter 53 gehörende Materialstege 88 vorhanden, die mit der Spritzleiste 85 zusammengefaßt sind. Die Materialstege 88 haben keine direkte Verbindung zum Stanzgitter 53 im Sockel 3. Nach dem Biegen der Auskragung 84 um die Biegekante 89 besitzen die Materialstege 88 zwischen dem Sockel 3 und der Spritzleiste 85 die gleiche Ausrichtung wie innerhalb der Spritzleiste 85. Parallel zur Spritzleiste 85 befindet sich an der Auskragung 84 ein Spritzsteg 90. In nur einem Arbeitsgang wird das Stanzgitter 53 mit dem Sockel 3, der Spritzleiste 85 und dem Spritzsteg 90 versehen. Der Spritzsteg 90 trägt gegenüberliegend Nutsteine 91, die sowohl in eine Nut 92 im Sockel 3 als auch in eine Nut 92 im Deckel 4 einsetzbar sind. Der Deckel 4 wird über die Klipsverbindung 15 mit dem Sockel verbunden und justiert dabei den Spritzsteg 90 zwischen sich. Die Auskragung 84 des Stanzgitters 53 erhält zwischen der Spritzleiste 85 und dem Sockel 3 eine erste 90°-Biegung. Dadurch kommt die Anlagefläche 87 der Spritzleiste 85 an der Stützkante 86 am Sockel zur Anlage. Zwischen der Spritzleiste 85 und dem Spritzsteg 90 erhält die Auskragung 84 eine zweite 90°-Biegung. Dadurch kommt ein Nut-Stein 91 am Spritzsteg 90 in der Nut 92 am Sockel 3 zu liegen. Am Ende der zweifach gebogenen Auskragung 84 befindet sich die Anschlußstecker 5. Sie liegen parallel zum Stanzgitter 53 als auch zum Sockel 3 vor. Mit dem am Sockel 3 verklipsten Deckel 4 werden die Anschlußstecker 5 abgedeckt. Der Deckel 4 besitzt eine Nut 92, in die der zweite Nutstein 91 am Spritzsteg 90 eingesetzt wird und justiert somit die Lage der Anschlußstecker 5. Der Deckel 4 trägt eine Haube 95, in die eine Steckeröffnung 93 eingelassen ist. Die Öffnung 93 umschließt auch noch eine Verdrehsicherung, mit der sichergestellt wird, daß der auf die Anschlußkontakte zu schiebende Anschlußstecker nicht falsch montiert werden kann. Der Deckel 4 besitzt weiterhin eine Platte 94, welche bis zum den Ansätzen 37 gegenüberliegenden Bereich ragt und die dort befindlichen, an dem Stanzgitter 53 befestigten Widerstände 70 überdeckt.

Die nicht dem elektrischen Stromfluß dienenden Teile sind aus Gründen der wirtschaftlichen Fertigung sowie des ästhetischen Äußeren des Hub-Schiebe-Schalters aus Kunststoff hergestellt.

## Patentansprüche

1. Hub-Schiebe-Schalter, insbesondere für das Hub-Schiebedach eines Kraftfahrzeuges, mit einem Anschlußkontakte (5) aufweisenden Gehäuse (1), einem im Gehäuse (1) verschwenk- oder verschiebbaren Betätigungsknopf (2), der mit einem Schiebe-Schaltglied (11) verbunden ist, das durch eine Rückstelleinrichtung (12) selbsttätig in seine Ausgangsstellung zurückgeht und den Betätigungsknopf (2) zurückstellt, dadurch gekennzeichnet, daß am Schiebe-Schaltglied (11) drehbeweglich ein Dreh-Schaltglied (15) gelagert ist, das durch einen am Betätigungsknopf (2) befestigten Hebel (16) beaufschlagbar ist.

2. Hub-Schiebe-Schalter nach Anspruch 1, dadurch gekennzeichnet, daß das einen Teil der Rückstelleinrichtung (12) aufweisende Dreh-Schaltglied (15) mittels einer Klipsverbindung (17) mit dem Schiebe-Schaltglied (11) verbunden und an der am Betätigungsknopf (2) befestigte Hebel (16) mit einem T-Stein (18) in eine im Drehschaltglied (15) angeordnete T-Nut (19) beweglich eingesetzt ist, wobei am Schiebe-Schaltglied (11) mindestens eine Lasche (20) befestigt ist, die drehbeweglich mit dem Betätigungsknopf (2) verbunden ist.

3. Hub-Schiebe-Schalter nach Anspruch 1 oder 2, dadurch gekennzeichnet, daß der Betätigungsknopf (2) in einer in die Oberseite (6) des Gehäuses (1) eingelassenen Mulde (22) angeordnet ist, und die Seitenflächen (23) des Betätigungsknopfes (2) parallel zu den Seitenwänden (24) des Gehäuses (1) liegen, wobei in den Seitenwänden (24) des Gehäuses (1) zum einen eine kreuzförmige Nut (25) und zum anderen ein Schlitz (26) voneinander beabstandet eingelassen sind, und daß in der kreuzförmigen Nut (25) ein am Betätigungsknopf (2) angespritzter Klipsbolzen (27) und in den Schlitz (26) ein die Verbindung zwischen Lasche (20) des Schiebe-Schaltgliedes (11) und Betätigungsknopf (2) realisierender Bolzen (21) gleitbeweglich und verklipst eingesetzt ist.

4. Hub-Schiebeschlater nach Anspruch 3, dadurch gekennzeichnet, daß der senkrechte, zum Schlitz (26) ausgerichtete Bereich der kreuzförmigen Nut (25) die Form eines Kreisbogens besitzt, dessen Mittelpunkt die Mitte des Schlitzes (26) ist.

5. Hub-Schiebe-Schalter nach Anspruch 4, dadurch gekennzeichnet, daß die Mulde (22) in der Oberseite (6) des Gehäuses (1) zweistufig ausgebildet ist, wobei die untere, zum Untergreifen des Betätigungsknopfes (2) dienende Stufe (29) eine geschlossene Oberfläche und die obere Stufe (30) einen in der Null-Stellung (31) durch den Betätigungsknopf(2) abgedeckten Durchbruch (32) aufweist, durch den der am Betätigungsknopf(2) befestigte Hebel (16), die am Schiebe-Schaltglied (11) angebrachten Laschen (20) und zum Betätigungsknopf(2) führenden Leitungen (33) hindurchgeführt sind.

6. Hub-Schiebe-Schalter nach einem der Ansprüche 1 bis 5, dadurch gekennzeichnet, daß die Rückstelleinrichtung (12) zum einen durch ein am Drehschaltglied (15) befestigtes, federbelastete Druckhülsen (34) tragendes Führungsrohr (35) und zum anderen durch zwei an einem Sockel (3) angespritzte, in das Gehäuse (1) hineinragende sowie vertiefte Rückstellpyramiden (36) tragende Vorsprünge (37) gebildet ist.

7. Hub-Schiebe-Schalter nach Anspruch 6, dadurch gekennzeichnet, daß die Rückstellpyramide (36) in mindestens einer Betätigungsrichtung einen einen Druckpunkt realisierenden Absatz (38) aufweist.

8. Hub-Schiebe-Schalter nach einem der Ansprüche 6 und 7, dadurch gekennzeichnet, daß der Sockel (3) ein zur Innenseite des Gehäuses (1) mindestens im Bereich von Kontaktpunkten (52) einer Kontaktfeder (47) freiliegendes Stanzgitter (53) und mindestens einen Paßzylinder (54) tragenden Dom (55) aufweist, auf dem die mit Paßbohrungen (56) versehene Kontaktfeder (47) aufsitzt.

9. Hub-Schiebe-Schalter nach Anspruch 8, dadurch gekennzeichnet, daß die Kontaktfeder (47) einen mittleren ebenen, die Paßbohrungen (56) aufweisenden Steg (57) besitzt, von dem mehrere V-förmige Winkel (58) ausgehen, deren Spitzen (59) je einer Betätigungsfläche (51) des Dreh-Schaltgliedes (15) oder einer Berührungsfläche (46) des Schiebe-Schaltgliedes (11) zugewandt sind, und der dem mittleren Steg (57) abgewandte Schenkel (60) des V-förmigen Winkels (58) eine von dem Stanzgitter (53) wegweisende, die Kontaktpunkte (52) bildende Abknickung (61) aufweist.

10. Hub-Schiebe-Schalter nach Anspruch 9, dadurch gekennzeichnet, daß die Kontaktfeder (47) mit ihren, im ebenen Steg (57) vorhandenen zwei Paßbohrungen (56) über die an den Domen (55) befindlichen Paßzylinder (54) auf den Domen (55) aufgelegt und nicht weiter zusätzlich befestigt ist, wobei zum seitlichen Toleranzausgleich eine der Paßbohrungen (56) als ein Langloch (63) ausgebildet ist.

11. Hub-Schiebe-Schalter nach einem der Ansprüche 8 bis 10, dadurch gekennzeichnet, daß die dem Stanzgitter (53) im Gehäuse (1) zugeordneten Kontaktpunkte (52) der Kontaktfeder (47) durch Schlitze (64) Zwillingskontakte bilden.

12. Hub-Schiebe-Schalter nach einem der Ansprüche 8 bis 11, dadurch gekennzeichnet, daß eine Seite der Kontaktfeder (47) zwischen die am Sockel (3) vorhandenen Vorsprünge (37) hineinreicht, und die Kontaktfeder (47) breite, die Kontaktpunkte (52) trennende Ausstanzungen (65) besitzt, wobei die Kontaktpunkte (52) tragende Kontaktarme (66) mit Durchstanzungen (67) versehen sind, und die Kontaktfeder (47) zumindest im Bereich der Kontaktpunkte (52) mit Kontaktmaterial ausgestattet ist.

13. Hub-Schiebe-Schalter nach einem der Ansprüche 8 bis 12, dadurch gekennzeichnet, daß das Stanzgitter (53) auf der der Kontaktfeder (47) abgewandten Seite in durch mit am Sockel (3) angespritzte Rippen (68) gebildete Kammern (69) freiliegt, und in die Kammern (69) Widerstände (70) eingelegt sind, deren Anschlußdrähte (71) mit dem Stanzgitter (53) elektrisch leitend verbunden sind.

14. Hub-Schiebe-Schalter nach einem der Ansprüche 8 bis 13, dadurch gekennzeichnet, daß am Stanzgitter (53) eine flexible, elektrische Leiterfolie (33) angebracht ist, die durch den Durchbruch (32) im Gehäuse (1) zu im Betätigungsknopf(2) vorhandenen Beleuchtungselementen (72) führt.

15. Hub-Schiebe-Schalter nach einem der Ansprüche 8 bis 14, dadurch gekennzeichnet, daß das Drehschaltglied (15) um die Achse (45) der Klipsverbindung (17) mit dem Schiebe-Schaltglied (11) schwenkbar ist, wobei die der Kontaktfeder (47) zugewandten Betätigungsflächen (51) des Drehschaltgliedes (15) nur in einer Gehäusehälfte (75), die durch die Mittelachse (76) des Gehäuses (1) fesgelegt ist, vorgesehen ist, und die Betätigungsflächen (51) des Drehschaltgliedes (15) in der Neutral- (31) und Schiebestellung (77) parallel zum Stanzgitter (53) liegen und erst nach dem Verschwenken des Betätigungsknopfes (2) die Betätigungsflächen (51) auf einer Seite der Achse (45) die Kontaktfeder (47) in Richtung des Stanzgitters (53) drücken.

16. Hub-Schiebe-Schalter nach einem der Ansprüche 8 bis 15, dadurch gekennzeichnet, daß das Schiebe-Schaltglied (11) zwischen Gehäuseunterseite (78) und einer Sockelwand (79) geführt ist, und die dem Stanzgitter (53) zugewandten, der Kontaktfeder (47) zugeordneten Berührungsflächen (46) aus mindestens einer Ruhefläche (80), die, die Kontaktfeder (47) leicht belastet läßt, mindestens einer Aktivfläche (81), die die Kontaktfeder (47) gegen das Stanzgitter (53) drückt, und einer schrägverlaufenden, den V-förmigen Winkel (58) der Kontaktfeder (47) angepaßten Übergangsfläche (82) bestehen, wobei die Ruhefläche (80) und die Aktivfläche (81) parallel zum Stanzgitter (53), auch nach dem Verschwenken des Betätigungsknopfes (2), ausgerichtet sind, und wobei die Berührungsflächen (46) des Schiebe-Schaltgliedes (11) auf nur einer durch die Mittelachse (76) des Gehäuses (1) festgelegten Gehäusehälfte (83), in der keine Betätigungsflächen (51) des Dreh-Schaltgliedes (15) vorhanden sind, vorgesehen sind.

17. Hub-Schiebe-Schalter nach einem der Ansprüche 8 bis 16, dadurch gekennzeichnet, daß das Stanzgitter (53) im Sockel (3) eingespritzt ist, eine gerade Auskragung (84) des Stanzgitters (53) über den Sockel (3) hinausragt und im vorbestimmten Abstand zum Sockel (3) mindestens eine die Auskragung (84) umfassende Spritzleiste (85) vorhanden ist.

18. Hub-Schiebe-Schalter nach Anspruch 17, dadurch gekennzeichnet, daß am Sockel (3) eine Stützkante (86) angebracht ist, an die sich eine Anlagefläche (87) der Spritzleiste (85) nach dem Biegen der Auskragung (84) abstützt.

19. Hub-Schiebe-Schalter nach einem der Ansprüche 17 oder 18, dadurch gekennzeichnet, daß mit der Spritzleiste (85) in der Auskragung (84) Materialstege (88) zusammengefaßt sind, die mit dem Stanzgitter (53) im Sockel (3) keine direkte Verbindung besitzen, und daß diese Materialstege (88) nach dem Biegen beidseits der Biegekante (89) die gleiche Ausrichtung haben.

20. Hub-Schiebe-Schalter nach einem der Ansprüche 17 bis 19, dadurch gekennzeichnet, daß ein Spritzsteg (90) Nutsteine (91) trägt, die in Nuten (92) sowohl im Sockel (3) als auch in einem an dem Sockel (3) befestigbaren, den Spritzsteg (90) zwischen sich justierbaren Deckel (4) einsetzbar sind.

21. Hub-Schiebe-Schalter nach einem der Ansprüche 17 bis 20, dadurch gekennzeichnet, daß die Auskragung (84) zwischen Spritzleiste (85) und dem Sockel (3) eine erste 90°-Biegung und zwischen der Spritzleiste (85) und dem Spritzsteg (90) eine zweite 90°-Biegung erhält, wodurch die Anlagefläche (87) der Spritzleiste (85) sich an der Stützkante (86) am Sockel (3) abstützt, und der Nutstein (91) am Spritzsteg (90) in der Nut (92) am Sockel (3) zu liegen kommt.

22. Hub-Schiebe-Schalter nach einem der Ansprüche 20 und 21, dadurch gekennzeichnet, daß der am Sockel (3) verklipsbare Deckel (4) die zweifach gebogene Auskragung (84) überdeckt, der Deckel (4) eine parallel zum Stanzgitter (53) ausgerichtete Steckeröffnung (93) besitzt, und eine Platte (94) des Deckels (4) die am Stanzgitter (53) befestigten Widerstände (70) abdeckt.

## Claims

1. Lift-and-slide switch, more especially for the lift-and-slide roof of an automotive vehicle, having a housing (1) which includes connecting contacts (5), an actuating button (2), which is pivotable or displaceable in the housing (1) and is connected to a sliding-and-switching member (11), which returns automatically into its initial position by means of a resetting arrangement (12) and resets the actuating button (2), characterised in that a rotary switching member (15) is rotatably mounted on the sliding-and-switching member (11) and is actuatable by means of a lever (16) secured on the actuating button (2).

2. Lift-and-slide switch according to claim 1, characterised in that the rotary switching member (15), which comprises one part of the resetting arrangement (12), is connected to the sliding-and-switching member (11) by means of a clip-in connection (17), and the lever (16), which is secured on the actuating button (2), is movably inserted with a T-shaped block (18) into a T-shaped groove (19), which is disposed in the rotary switching member (15), at least one link (20), which is rotatably connected to the actuating button (2), being secured on the sliding-and-switching member (11).

3. Lift-and-slide switch according to claim 1 or 2, characterised in that the actuating button (2) is disposed in a depression (22) provided m the upper surface (6) of the housing (1), and the lateral faces (23) of the actuating button (2) lie parallel to the lateral walls (24) of the housing (1), a cross-shaped groove (25), on the one hand, and a slot (26), on the other hand, being provided in the lateral walls (24) of the housing (1) with a spacing therebetween, and in that a clip-in pin (27), which is injection-moulded on the actuating button (2), is inserted, slidingly and clipped in position, in the cross-shaped groove (25), and a pin (21), which establishes the connection between link (20) of the sliding-and-switching member (11) and actuating button (2), is inserted, slidingly and clipped in position, in the slot (26).

4. Lift-and-slide switch according to claim 3, characterised in that the vertical region of the cross-shaped groove (25) orientated towards the slot (26) has the form of an arc, the central point of which is the centre of the slot (26).

5. Lift-and-slide switch according to claim 4, characterised in that the depression (22) in the upper surface (6) of the housing (1) is configured in two stages, the lower stage (29), which serves to co-operate with the actuating button (2), having a closed upper surface, and the upper stage (30) having an opening (32), which is covered in the zero position (31) by the actuating button (2), and through which extend the lever (16) secured on the actuating button (2), the links (20) attached to the sliding-and-switching member (11) and lines (33) leading to the actuating button (2).

6. Lift-and-slide switch according to one of claims 1 to 5, characterised in that the resetting arrangement (12) is formed, on the one hand, by a guide tube (35), which is secured to the rotary switching member (15) and carries spring-loaded pressure sleeves (34), and, on the other hand, by two projection members (37), which are injection-moulded to fit on a base (3), provide into the housing (1) and carry recessed resetting pyramids (36).

7. Lift-and-slide switch according to claim 6, characterised in that the resetting pyramid (36) has a stepped portion (38), which establishes a pressure point, in at least one direction of actuation.

8. Lift-and-slide switch according to one of claims 6 and 7, characterised in that the base (3) has a punched lattice (53), which is exposed to the internal side of the housing (1) at least in the region of contact points (52) of a contact spring (47), and at least one dome (55), which carries adjusting cylinders (54), and on which dome the contact spring (47), provided with adjusting bores (56), sits.

9. Lift-and-slide switch according to claim 8, characterised in that the contact spring (47) has a central, flat web (57), which is provided with the adjusting bores (56), and from which web a plurality of V-shaped wedges (58) extend, the apexes (59) of said wedges each facing an actuating face (51) of the rotary switching member (15) or a contact face (46) of the sliding-and-switching member (11), and the portion (60) of the V-shaped wedge (58) remote from the central web (57) having a bent portion (61), which points away from the punched lattice (53) and forms the contact points (52).

10. Lift-and-slide switch according to claim 9, characterised in that the contact spring (47) is placed upon the domes (55), via the adjusting cylinders (54) situated on the domes (55), with its two adjusting bores (56) provided in the flat web (57) and is not additionally secured further, one of the adjusting bores (56) being configured as an elongate slot (63) in order to compensate for lateral tolerance.

11. Lift-and-slide switch according to one of claims 8 to 10, characterised in that the contact points (52) of the contact spring (47), which are associated with the punched lattice (53) in the housing (1), form twin contacts through slots (64).

12. Lift-and-slide switch according to one of claims 8 to 11, characterised in that one side of the contact spring (47) extends between the projection members (37) provided on the base (3), and the contact spring (47) has wide punched-out portions (65), which separate the contact points (52) contact arms (66), which carry the contact points (52), being provided with punched-through portions (67), and the contact spring (47) being provided with contact material at least in the region of the contact points (52).

13. Lift-and-slide switch according to one of claims 8 to 12, characterised in that the punched lattice (53) on the side remote from the contact spring (47) is exposed in chambers (69), which are formed by ribs (68) injection-moulded to fit on the base (3), and resistors (70) are inserted in the chambers (69), the connecting wires (71) of said resistors being electrically conductively connected to the punched lattice (53).

14. Lift-and-slide switch according to one of claims 8 to 13, characterised in that a flexible, electrical conductor foil (33) is attach to the punched lattice (53), said foil extending through the opening (32) in the housing (1) to illuminating elements (72) provided in the actuating button (2).

15. Lift-and-slide switch according to one of claims 8 to 14, characterised in that the rotary switching member (15) is pivotable about the axis (45) of the clip-in connection (17) with the sliding-and-switching member (11), the actuating faces (51) of the rotary switching member (15), which face the contact spring (47), being provided only in one housing half (75), which is determined by the central axis (76) of the housing (1), and the actuating faces (51) of the rotary switching member (15) lie parallel to the punched lattice (53) in the neutral position (31) and in the sliding position (77), and the actuating faces (51) on one side of the axis (45) press the contact spring (47) in the direction of the punched lattice (53) only after the pivotal movement of the actuating button (2).

16. Lift-and-slide switch according to one of claims 8 to 15, characterised in that the sliding-and-switching member (11) extends between housing inderside (78) and a base wall (79), and the contact faces (46), which face the punched lattice (53) and are associated with the contact spring (47), comprise at least one resting face (80), which permits the contact spring (47) to be slightly loaded, at least one active face (81), which presses the contact spring (47) towards the punched lattice (53), and an inclinedly extending transitional face (82), which is adapted to the V-shaped wedge (58) of the contact spring (47), the resting face (80) and the active face (81) being orientated parallel to the punched lattice (53), even after the pivotal movement of the actuating button (2), and the contact faces (46) of the sliding-and-switching member (11) being provided on only one housing half (83), which is determined by the central axis (76) of the housing (1), and in which half there are no actuating faces (51) of the rotary switching member (15).

17. Lift-and-slide switch according to one of claims 8 to 16, characterised in that the punched lattice (53) is injection-moulded in the base (3), a rectilinear projection (84) of the punched lattice (53) protrudes beyond the base (3), and there is at least one injection-moulded bar (85) enclosing the projection (84) at a predetermined spacing from the base (3).

18. Lift-and-slide switch according to claim 17, characterised in that a supporting edge (86) is attached to the base (3), on which edge an abutment face (87) of the injection-moulded bar (85) is supported after the bending of the projection (84).

19. Lift-and-slide switch according to one of claims 17 or 18, characterised in that material webs (88) are combined with the injection-moulded bar (85) in the projection (84), said material webs having no direct connection with the punched lattice (53) in the base (3), and in that these material webs (88) have the same orientation after the bending on both sides of the bending edge (89).

20. Lift-and-slide switch according to one of claims 17 to 19, characterised in that an injection-moulded web (90) carries groove blocks (91), which are insertable in grooves (92) both in the base (3) and in a cover, which is securable on the base (3) and adjusts the injection-moulded web (90) therebetween.

21. Lift-and-slide switchh according to one of claims 17 to 20, characterised in that the projection (84) is provided with a first 90° bend between injection-moulded bar (85) and the base (3) and with a second 90° bend between the injection-moulded bar (85) and the injection-moulded web (90), whereby the abutment face (87) of the injection-moulded bar (85) is supported on the supporting edge (86) on the base (3), and the groove block (91) comes to lie on the injection-moulded web (90) in the groove (92) on the base (3).

22. Lift-and-slide switch according to one of claims 20 and 21, characterised in that the cover (4), which can be clipped in position on the base (3), covers the doubly bent projection (84), the cover (4) has a plug aperture (93) orientated parallel to the punched lattice (53), and a plate (94) of the cover (4) covers the resistors (70), which are secured on the punched lattice (53).

## Revendications

1. Interrupteur à coulisse de levage, en particulier pour le toit coulissant et relevable d'un véhicule automobile, avec un boîtier (1) comprenant des contacts de branchement (5), un bouton d'actionnement (2) pouvant pivoter ou coulisser dans le boîtier (1), lequel bouton est relié à un organe de commutation coulissant (11) qui revient automatiquement dans sa position initiale par un dispositif de rappel (12), et rappelle le bouton d'actionnement (2), caractérisé en ce que sur l'organe de commutation coulissant (11) est monté mobile à rotation un organe de commutation tournant (15), qui peut être sollicité par un levier (16) fixé au bouton d'actionnement (2).

2. Interrupteur à coulisse de levage selon la revendication 1, caractérisé en ce que l'organe de commutation tournant (15) comprenant une partie du dispositif de rappel (12) est relié à l'organe de commutation coulissant (11) au moyen d'un assemblage à clipsage (17), et est inséré mobile sur le levier (16) fixé sur le bouton d'actionnement (2), muni d'un coulisseau en T (18) dans une rainure en T (19) ménagée dans l'organe de commutation tournant (15), une patte (20) au moins, qui est reliée mobile à rotation au bouton d'actionnement (2), étant fixée à l'organe de commutation coulissant (11).

3. Interrupteur à coulisse de levage selon la revendication 1 ou 2, caractérisé en ce que le bouton d'actionnement (2) est disposé dans un creux (22) pratiqué dans la face supérieure (6) du boîtier (1) et les faces latérales (23) du bouton d'actionnement (2) sont parallèles aux parois latérales (24) du boîtier (1), dans les parois latérales (24) du boîtier (1) étant pratiquées d'une part une rainure cruciforme (25) et d'autre part, une lumière (26) espacées l'une de l'autre et en ce que dans la rainure cruciforme (25) est inséré, mobile à glissement et clipsé, un téton de clipsage (27) moulé par injection sur le bouton d'actionnement (2), et dans la fente (26) est inséré, mobile à glissement et clipsé, un axe (21) réalisant la liaison entre la patte (20) de l'organe de commutation coulissant (11) et le bouton d'actionnement (2).

4. Interrupteur à coulisse de levage selon la revendication 3, caractérisé en ce que la zone verticale, orientée vers la fente (26) de la rainure cruciforme (25), a la forme d'un arc de cercle, dont le centre est le milieu de la fente (26).

5. Interrupteur à coulisse de levage selon la revendication 4, caractérisé en ce que le creux (22) de la face supérieure (6) du boîtier (1) est à deux gradins, le gradin inférieur (29) servant à passer sous le bouton d'actionnement (2), présentant une surface fermée et le gradin supérieur (30) présentant un ajour (32) recouvert par le bouton d'actionnement (2) à la position neutre (31), à travers lequel passent le levier (16) fixé au bouton d'actionnement (2), les pattes (20) fixées à l'organe de commutation coulissant (11) et des liaisons (33) conduisant au bouton d'actionnement (2).

6. Interrupteur à coulisse de levage selon l'une des revendications 1 à 5, caractérisé en ce que le dispositif de rappel (12) est formé, d'une part, par un tube de guidage (35), fixé à l'organe de commutation tournant (15), portant des douilles de compression (34) rappelées par ressort et d'autre part, par deux saillies (37), moulées par injection sur un socle (3), portant des pyramides de rappel (36) s'étendant à l'intérieur du boîtier (1) et en creux.

7. Interrupteur à coulisse de levage selon la revendication 6, caractérisé en ce que les pyramides de rappel (36) présentent, suivant au moins une direction d'actionnement, un épaulement (38) réalisant un point d'appui.

8. Interrupteur à coulisse de levage selon l'une des revendications 6 et 7, caractérisé en ce que le socle (3) présente une grille de découpe (53) dégagée vers le côté intérieur du boîtier (1), au moins dans la zone de points de contact (52) d'un ressort de contact (47), et au moins un dôme (55) portant des cylindres d'ajustage (54), sur lequel repose le contact de ressort (47), pourvu de perçages d'ajustage (56).

9. Interrupteur à coulisse de levage selon la revendication 8, caractérisé en ce que le ressort de contact (47) possède une traverse plane centrale (57) présentant les perçages d'ajustage (56), à partir de laquelle s'étendent plusieurs coudes en V (58), dont les sommets (59) sont orientés chacun vers une surface d'actionnement (51) de l'organe de commutation tournant (15) ou une surface de contact (46) de l'organe de commutation coulissant (11), et la branche (60) du coude en V (58) située à l'opposé de la traverse centrale (57) présente une partie repliée (61) en s'éloignant de la grille de découpe (53), formant les points de contact (52).

10. Interrupteur à coulisse de levage selon la revendication 9, caractérisé en ce que le ressort de contact (47) avec ses deux perçages d'ajustage (56) pratiqués dans la traverse plane (57) est placé sur les dômes (55) par l'intermédiaire des cylindres d'ajustage (54) se trouvant sur les dômes (55), et n'est pas fixé en supplément, l'un des perçages d'ajustage (56) étant conformé en trou oblong (63) pour la compensation latérale de tolérances.

11. Interrupteur à coulisse de levage selon l'une des revendications 8 à 10, caractérisé en ce que les points de contact (52) du ressort de contact (47), associés à la grille de découpe (53) dans le boîtier (1), forment des contacts jumeaux par des fentes (64).

12. Interrupteur à coulisse de levage selon l'une des revendications 8 à 11, caractérisé en ce qu'un côté du ressort de contact (47) pénètre à l'intérieur entre les saillies (37) prévues sur le socle (3), et le ressort de contact (47) possède des découpes externes (65) larges, séparant les points de contact (52), des bras de contact (66) portant les points de contact (52) étant pourvus de découpes traversantes (67), et le ressort de contact (47) étant équipé d'une matière de contact au moins dans la zone des points de contact (52).

13. Interrupteur à coulisse de levage selon l'une des revendications 8 à 12, caractérisé en ce que la grille de découpe (53) dégage, sur la face orientée à l'opposé du ressort de contact (47), des chambres (69) formées par des nervures (68) moulées par injection sur le socle (3), et dans les chambres (69) sont placées des résistances (70), dont les fils de branchement (71) sont reliés de manière électriquement conductrice avec la grille de découpe (53).

14. Interrupteur à coulisse de levage selon l'une des revendications 8 à 13, caractérisé en ce que sur la grille de découpe (53) est placée une feuille conductrice électriquement flexible (33) qui passe à travers l'ajour (32) du boîtier (1) vers des éléments d'éclairage (72) se trouvant dans le bouton d'actionnement (2).

15. Interrupteur à coulisse de levage selon l'une des revendications 8 à 14, caractérisé en ce que l'organe de commutation tournant (15) peut pivoter autour de l'axe (45) de l'assemblage par clipsage (17) à l'organe de commutation coulissant (11), les surfaces d'actionnement (51) de l'organe de commutation tournant (15) tournées vers le ressort de contact (47) n'étant prévues que dans une moitié de boîtier (75), qui est définie par l'axe médian (76) du boîtier (1), et les surfaces d'actionnement (51) de l'organe de commutation tournant (15) dans la position neutre (31) et la position de coulissement (77) sont parallèles à la grille de découpe (53), et après pivotement du bouton d'actionnement (2) seulement, les surfaces d'actionnement (51) sur un côté de l'axe (45) pressent le ressort de contact (47) en direction de la grille de découpe (53).

16. Interrupteur à coulisse de levage selon l'une des revendications 8 à 15, caractérisé en ce que l'organe de commutation coulissant (11) est guidé entre la face inférieure de boîtier (78) et une paroi de socle (79), et les surfaces de contact (46) orientées vers la grille de découpe (53), associées au ressort de contact (47), sont constituées d'au moins une surface de repos (80), qui permet de solliciter légèrement le ressort de contact (47), d'au moins une surface active (81), qui presse le ressort de contact (47) contre la grille de découpe (53), et d'une surface de transition s'étendant obliquement (82), adaptée au coude en forme de V (58) du ressort de contact (47), la surface de repos (80) et la surface active (81) étant orientées parallèlement à la grille de découpe (53), même après le pivotement du bouton d'actionnement (2), et les surfaces de contact (46) de l'organe de commutation coulissant (11) n'étant prévues que dans une moitié de boîtier (83) définie par l'axe médian (76) du boîtier (1), dans laquelle ne se trouve aucune surface d'actionnement (51) de l'organe de commutation tournant (15).

17. Interrupteur à coulisse de levage selon l'une des revendications 8 à 16, caractérisé en ce que la grille de découpe (53) est moulée par injection dans le socle (3), un porte-à-faux rectiligne (84) de la grille de découpe (53) dépasse du socle (3) et à la distance prédéterminée du socle (3) se trouve au moins une baguette moulée par injection (85) , entourant le porte-à-faux (84).

18. Interrupteur à coulisse de levage selon la revendication 17, caractérisé en ce que sur le socle (3) est ménagée une arête d'appui (86), contre laquelle prend appui une surface d'application (87) de la baguette moulée par injection (85), après avoir coudé le porte-à-faux (84).

19. Interrupteur à coulisse de levage selon l'une des revendications 17 ou 18, caractérisé en ce qu'avec la baguette moulée par injection (85) sont réunies dans le porte-à-faux (84), des traverses de matière (88), qui ne présentent aucune liaison directe avec la grille de découpe (53) dans le socle (3), et en ce que ces traverses de matière (88) ont la même orientation, après avoir coudé les deux côtés de l'arête de cintrage (89).

20. Interrupteur à coulisse de levage selon l'une des revendications 17 à 19, caractérisé en ce qu'une traverse moulée par injection (90) porte des coulisseaux (91), qui peuvent être insérés dans des rainures (92) du socle (3) comme du couvercle (4) à fixer sur le socle (3), ajustant entre eux la traverse moulée par injection (90).

21. Interrupteur à coulisse de levage selon l'une des revendications 17 à 20, caractérisé en ce qu'il est conféré au porte-à-faux (84), entre la baguette moulée par injection (85) et le socle (3), un premier coude à 90° et entre la baguette moulée par injection (85) et la traverse moulée par injection (90), un deuxième coude à 90°, ce qui fait que la surface d'application (87) de la baguette moulée par injection (85) prend appui contre l'arête d'appui (86) du socle (3), et le coulisseau (91) sur la traverse moulée par injection (90) vient se trouver dans la rainure (92) du socle (3).

22. Interrupteur à coulisse de levage selon l'une des revendications 20 et 21, caractérisé en ce que le couvercle (4) à clipser sur le socle (3) recouvre le porte-à-faux (84) coudé deux fois, le couvercle (4) possède une ouverture de connecteur (93) orientée parallèlement à la grille de découpe (53), et une plaque (94) du couvercle (4) recouvre les résistances (70) fixées sur la grille de découpe (53).
